# EUROPEAN PATENT APPLICATION

(11) **EP 2 568 685 A1**
(43) Date of publication of application: **13.03.2013**
(21) Application number: 10851029.8
(22) Date of filing: 07.05.2010
(51) Int. Cl.: H04L 29/08

(54) **SYSTEM AND METHOD FOR SYNCHRONIZING THE PROFILE OF A USER IN SOCIAL NETWORKS AND THE USER'S PERSONAL CONTACT CARD (PCC)**

(71) Applicant: Telefónica, S.A., 28013 Madrid (ES)
(72) Inventor: NUÑEZ DÍAZ, José Luis, E-28013 Madrid (ES); FULLEA CARRERA, Eduardo, E-28013 Madrid (ES); MORÓN ABAD, Rafael, E-28013 Madrid (ES); SÁNCHEZ DASI, José Juan, E-28013 Madrid (ES); GÓMEZ CARREÑO, Bienvenido, E-28013 Madrid (ES)
(74) Representative: Gonzalez-Alberto Rodriguez, Natalia
(86) International application number: PCT/ES2010/070309
(87) International publication number: WO 2011/138473

(57) **Abstract**

The method and system for synchronizing social networks and Personal Contact Cards (PCC) update the profile of a user published in an Open Mobile Alliance Converged Address Book (OMA CAB) system with the information published and updated on one or more social networks to which the user subscribes, by means of synchronization by polling or synchronization by subscription/notification. To do so, the user sends prior authorization to access the user profile published in the social network to a telecommunication services provider operating the OMA CAB system.

## Description

### Object of the Invention

As expressed in the title of this specification, the present invention relates to a system and method for synchronizing the profile of a user in at least one social network and the user's Personal Contact Card (PCC), the essential purpose of which consists of providing the means necessary for updating the Personal Contact Card associated with the user and provided by a telecommunications provider with the information that the user has previously updated on the social network to which the user belongs. This in turn serves to keep the Address Books of other users who subscribe to changes in said Personal Contact Card updated.

### Background of the Invention

The Open Mobile Alliance (OMA) defines the current telecommunications standards. This body provides the mechanisms for always keeping the Address Books of users storing user contact information updated. This is achieved with the aid of the Personal Contact Card or PCC which contains updated contact information that other users can subscribe to.

On the other hand, social networks are currently one of the preferred ways for people to stay in contact with friends, family or even to find a new job. Social networks not only allow people to share any type of content, such as photos, videos or text entries, but they are also an incredible source of personal contact information. In fact, these new means of communication result in many fragments of context information concerning user propagation over different information sources.

However, personal profiles provided on different social networks and of the Personal Contact Card (defined by OMA in the CAB) of the services provider are not related to one another.

The OMA has currently specified the OMA Converged Address Book (OMA CAB) enabler, which provides a framework for storing the user's Address Book in a storage network and keeps it synchronized with the contact lists of the user's different devices. This OMA CAB enabler further allows the user to define a Personal Contact Card (PCC) with the user's contact information to which other users can subscribe such that these users receive notifications when this information changes and can thereby have more updated contact information in their Address Books.

The OMA CAB enabler is based on standard technologies and protocols such as Session Initiation Protocol (SIP), XML Document Management (XDM/XCAP) and OMA Data Synchronization (OMA DS). In addition to these standards, there are a number of services on the Internet offering the same experience in a non-standard and registered manner, such as Plaxo and ZYB for example.

On the other hand, the GSMA Rich Communication Suite defines an Enhanced Address Book which supports a characteristic known as Social Presence. This characteristic can be seen as a piece of information for a user's close friends to make them known what the user is doing, the user's mood, location, etc. Social Presence information includes "hyper-availability" - "contact me" status-, portrait icon, free text, and favorite link- personal or favorite Internet site-.

Despite the fact that OMA CAB defines an excellent framework for managing users' Address Books and keeping them updated, they have no relation whatsoever with the world of the Internet, and especially with social networks.

Therefore, it would be desirable to find a method and system for establishing a relationship between the information published in social networks that are updated by users daily with the information published in Personal Contact Cards (PCC) managed by telecommunications providers.

### Description of the Invention

To achieve the objectives and prevent the drawbacks indicated in preceding sections, the invention consists of a system and method for synchronizing the profile of a user in a social network and the Personal Contact Card (PCC) of that same user.

The main innovation of the present invention is to provide a link between the popular but non-interoperable personal profile manager in social networks with the standard and interoperable manager provided by OMA CAB architecture. In fact, the present invention makes the OMA CAB enabler (described below) interoperable with all social networks in the personal profile management framework. This allows OMS CAB-based services to be updated with the changes in personal profiles entered by users in social networks in addition to the changes made directly through the OMA CAB environment.

The present invention is based on the Open Mobile Alliance Converged Address Book (OMA CAB) system. The present invention adds a set of modules to the OMA CAB system which allow Personal Contact Card XML Document Management Servers (PCC XDMS) contained in said system to always be updated with the user profiles when a user updates his/her profile in any one of the social networks to which the user belongs.

The architecture in which the present invention is embedded comprises a telecommunications provider side in turn comprising a network side and a user side, and an internet side in turn comprising a user side and a network side. The network side of the internet side comprises at least one social network, and the user side of the internet side comprises a client interface communicating the client with the social network.

The user side of the telecommunications provider side comprises at least one Converged Address Book Client (CAB Client) which comprises at least the following elements defined by the OMA CAB system: a Data Synchronization Client (DS Client) and an XML Document Management Client (XDM Client).

In turn, the network side of the telecommunications provider side comprises at least the following elements defined by the OMA CAB system: an OMA XDM enabler, SIC-1, SIC-2, XDM-3i, XDM-4i, XDM-5i, XDM-7i and XDM-non_SIP interfaces, a CAB server and, in a novel aspect, a Social Gateway, an extended XDM-4i interface and an Application Interface. The Converged Address Book (CAB) server in turn comprises at least one Data Synchronization (DS) server.

On the other hand, the OMA CAB enabler comprises at least the following elements defined by the OMA CAB system: an Address Book XDMS server (AB XDMS server), a PCC XDMS server and a CAB User Preferences XDMS server.

The novel Social Gateway of the present invention is the element that interacts with the PCC XDMS server, which is responsible for storing Personal Contact Cards (PCC), and with social networks storing user profiles. Therefore, the novel Social Gateway of the present invention updates the user profile of the operator network according to the information provided in the users' social networks.

The novel extended XDM-4i interface is based on the XDM-4i interface specified by OMA. This novel extended XDM-4i interface comprises PCC access means which access Personal Contact Card (PCC) documents for updating the documents according to the information of the user profile retrieved from social networks.

The novel Application Interface comprises profile retrieval means which access social networks for retrieving profiles stored in social networks. The user profile retrieval means comprise specific protocols for each particular social network. An example of a specific protocol is OpenSocial.

The present invention extends Social Presence information as a potential extension into future launches with new attributes such as:
● the name of the display;
● context icons, such as a photo or image;
● communication addresses, such as email;
● important events, such as birthdays;
● support for tags and multiple URIs in the favorite link attribute;

On the other hand, the present invention comprises a novel method which, based on the elements developed by the OMA and on the novel elements comprised in the system of the present invention, allows updating the user profiles of a telecommunications operator by means of synchronizing Personal Contact Cards (PCC) and social networks.

The novel method for synchronizing the profile of a user in social networks and Personal Contact Cards (PCC) of the present invention, where the user's user profile is published in an Open Mobile Alliance Converged Address Book (OMA CAB) system and published in at least one social network, comprises the user profile comprised in the OMA CAB system being updated by means of a synchronization option selected from:
● synchronization by polling; and,
● synchronization by subscription/notification.

To do so, the user sends prior authorization to access the user profile published in the social network to a telecommunication services provider comprising the OMA CAB system.

The option of synchronization by polling in turn comprises the following steps:
a) the user updating the user profile in the social network by means of a browser;
b) periodically connecting a Social Gateway with the social network in search of updated user profiles and retrieving updated data of said updated user profiles;
c) updating the Personal Contact Card (PCC) with the updated data of the updated user profiles by means of an extended XDM-4i interface connecting the Social Gateway with the OMA CAB system; and,
d) optionally sending notification to the user about the update in the Personal Contact Card (PCC) including the updated data.

On the other hand, the option of synchronization by subscription/notification comprises the following steps:
a) a Social Gateway subscribing to the social network;
b) the user updating the user profile in the social network by means of a browser;
c) the social network sending updated data of updated user profiles to the Residential Gateway;
d) updating the Personal Contact Card (PCC) with the updated data of the updated user profiles by means of an extended XDM-4i interface connecting the Social Gateway with the OMA CAB system; and,
e) optionally sending a notification to the user about the update in the user's PCC including the updated data;

Both in the option of synchronization by polling and in the option of synchronization by subscription/notification, notification to the CAB client is done by means of the SIC-1 interface if the CAB client supports the Session Initiation Protocol (SIP), or otherwise by means of the XDM-non_SIP interface.

In turn, the updated Personal Contact Card (PCC) serves for updating the Address Books of those users who subscribe to the Personal Contact Card (PCC) of said user.

The advantages of the present invention are based on the fact that it allows unifying the view of both profiles (social networks and PCC) when telecommunications services by means of subscription/notification or by polling are used for updates of user profiles in social networks.

On the other hand, the communication possibilities for users increase because the update information can include new web pages or personal spaces where a user publishes a profile to other users.

The present invention further reduces entrance barriers so that users begin to use services that are compatible with OMA CAB because it is not necessary to define their Personal Contact Cards from scratch and keep them updated in the event that they manage their profiles in social networks themselves.

To aid in better understanding this specification and forming an integral part thereof, drawings are attached below in which the object of the invention has been depicted with an illustrative and non-limiting manner.

### Brief Description of the Drawings

Figure 1 schematically depicts the relationship between the OMA CAB system in the operator domain with four social networks according to the current state of the art.
Figure 2 schematically depicts the relationship between the OMA CAB system in the operator domain with four social networks according to the present invention.
Figure 3 schematically depicts synchronization by polling of the present invention by means of a flow chart.
Figure 4 schematically depicts synchronization by subscription/notification of the present invention by means of a flow chart.
Figure 5 schematically depicts the architecture in which the present invention is embedded by means of a block diagram.
Figure 6 schematically depicts the method of the present invention for synchronization by polling by means of a sequence diagram.
Figure 7 schematically depicts the method of the present invention for synchronization by subscription/notification by means of a sequence diagram.

### Description of an Embodiment of the Invention

A description of an example of the invention is provided below in reference to the drawings.

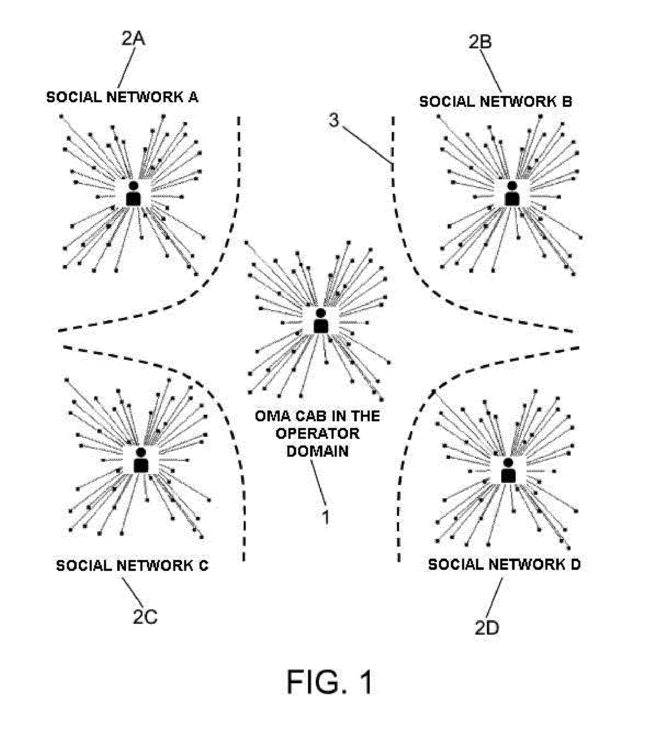

Figure 1 graphically shows that in the state of the art social networks (2A, 2B, 2C, 2D) are not connected with the OMA CAB system (1) in the operator domain. Therefore, in the state of the art there is no way of updating user profiles published in telecommunications operators from the update performed by users in their user profiles contained in the social networks to which they belong.

In fact, there is a very important barrier (3) for the users to begin using CAB system-based services, i.e., this barrier symbolizes the need to define the user's Personal Contact Card (PCC) and keep it updated. This barrier can be evaded by retrieving the information from the user profile in the social network to which the user belongs and which the user updates and manages. Although there are some fields in the Social Presence to indicate other communication addresses, such as user identifiers in social networks, no efficient path has been defined for keeping the information consistent with what the user is doing, the user's mood, location, photos and any other content provided by social networks.

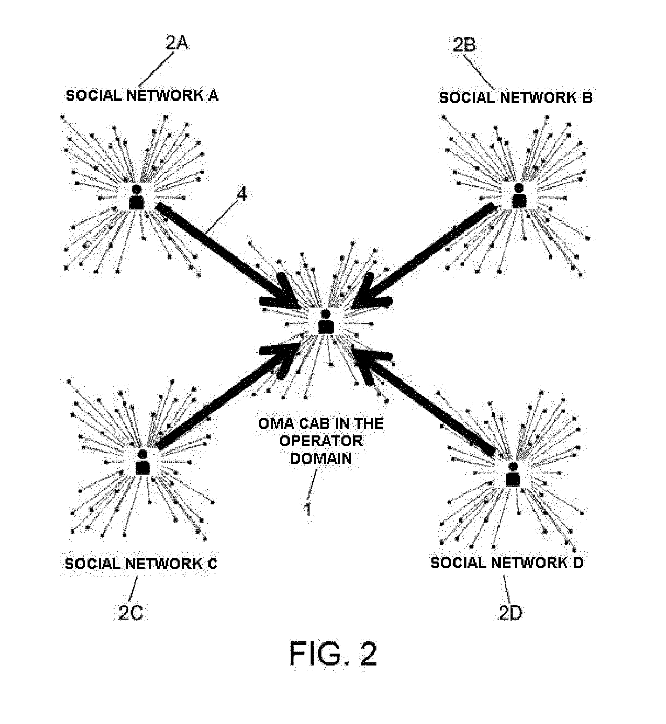

Figure 2 graphically shows that the social networks (2A, 2B, 2C, 2D) are connected (4) with the OMA CAB system (1) in the operator domain with the system and method provided by the present invention. Both the method and system of the present invention provide the necessary elements for providing a link between the Personal Contact Card (PCC) of the user in services compatible with OMA CAB as well as in the Social Presence of the user, and the information of the user profile published in social networks. The link of the present invention is the opposite of the solutions already mentioned for combining user information from different sources because the mentioned solutions are proprietary solutions and are not consistent with telecommunications standards.

The present invention thereby provides a link (4) which allows interaction between the personal information provided on social networks and an OMA CAB-based system, and especially the Personal Contact Card (PCC) which users show to other users by means of OMA CAB-based telecommunications operators.

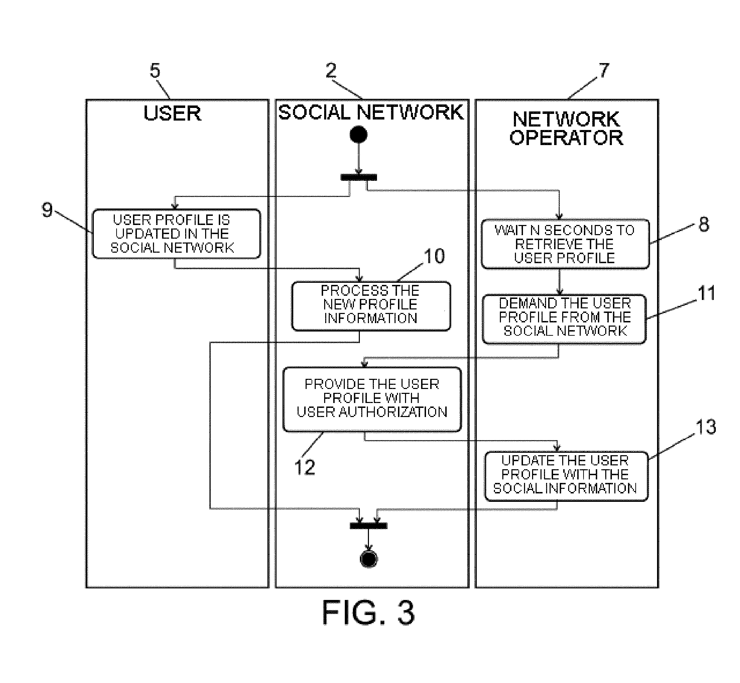

Figure 3 shows a flow chart of synchronization by polling of the present invention. In this case the process is as follows. The network operator waits N seconds to retrieve the user profile from the social network. Meanwhile, the user can update the user profile in the social network (9) by any means provided, generally by means of a web browser or a similar application for any type of mobile or land device. If the user has updated the user profile, this new information of the profile is processed (10) in the social network (2). After the N seconds have passed, the network operator demands the user profile in the social network to check whether it has changed since the last time (11). The social network provides (12) the network operator with the user profile if it has the client's approval. If there is any change, the OMA CAB-based system of the present invention updates (13) the corresponding user profile in the OMA CAB-based system of the present invention.

However, synchronization by polling can be enhanced by adding a mechanism for the social network to notify the operator of the change in the user profile, such that the telecommunications operator can perform the suitable update and thus keep the user profile updated.

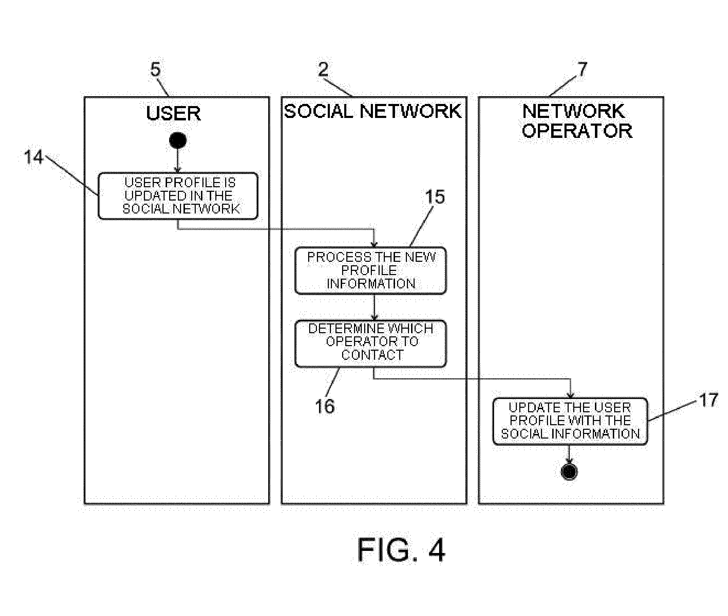

This mechanism requires the support of a subscription/notification scheme by the social network, which includes a mechanism for the CAB system to ask the social network about the subscription to certain user profiles, as well as a process for notifying changes back to the CAB system. This mechanism is detailed in Figure 4.

Figure 4 shows that the user updates the user profile (14) in the social network. The social network processes the new information of the profile (15). The social network determines which network operator subscribes to changes in that user profile and sends the operator notification (16). The OMA CAB-based system of the present invention in the network operator domain then updates the corresponding user profile in that system (17).

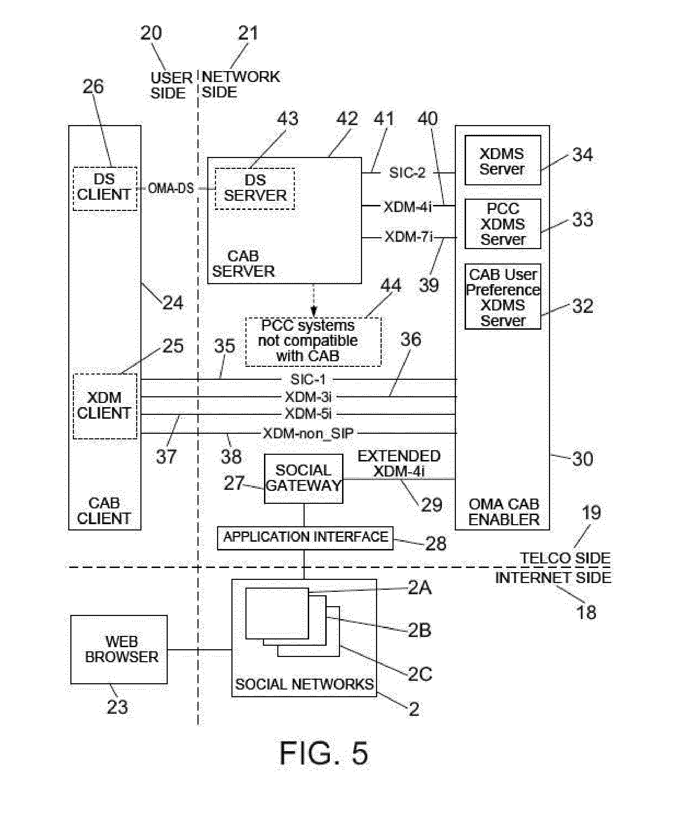

Figure 5 shows the architecture in which the present invention is embedded and which comprises the novel elements developed by the present invention by means of a block diagram. These novel elements are a Social Gateway (27), an extended XDM-4i interface (29) and an application interface (28). Furthermore, the architecture in which the present invention is embedded is divided into a telecommunications provider side (19) in turn divided into a network side (21) and a user side (20), and an internet side (18) in turn divided into a user side and a network side. The network side of the internet side comprises social networks (2, 2A, 2B, 2C), and the user side of the internet side comprises a web browser (23) communicating the client with the social network (2).

The user side of the telecommunications provider side comprises at least one Converged Address Book Client (CAB Client) (24) which comprises at least the following elements defined by the OMA CAB system: a Data Synchronization Client (DS Client) (26) and an XML Document Management Client (XDM Client) (25).

In turn, the network side of the telecommunications provider side comprises at least the following elements defined by the OMA CAB system: an OMA XDM enabler (30), SIC-1 (35), SIC-2 (41), XDM-3i (36), XDM-4i (40), XDM-5i (37), XDM-7i (39) and XDM-non_SIP (38) interfaces, a CAB server and, in a novel manner, a Social Gateway (27), an extended XDM-4i interface (29) and an Application Interface (28). The Converged Address Book (CAB) server (42) in turn comprises at least one Data Synchronization (DS) server (43), where the CAB server connects with external systems not compatible with CAB systems (44).

On the other hand, the OMA XDM enabler (30) comprises at least the following elements defined by the OMA CAB system: an Address Book XDMS (AB XDMS) server (34), a PCC XDMS server (33) and a CAB User Preferences XDMS server (32).

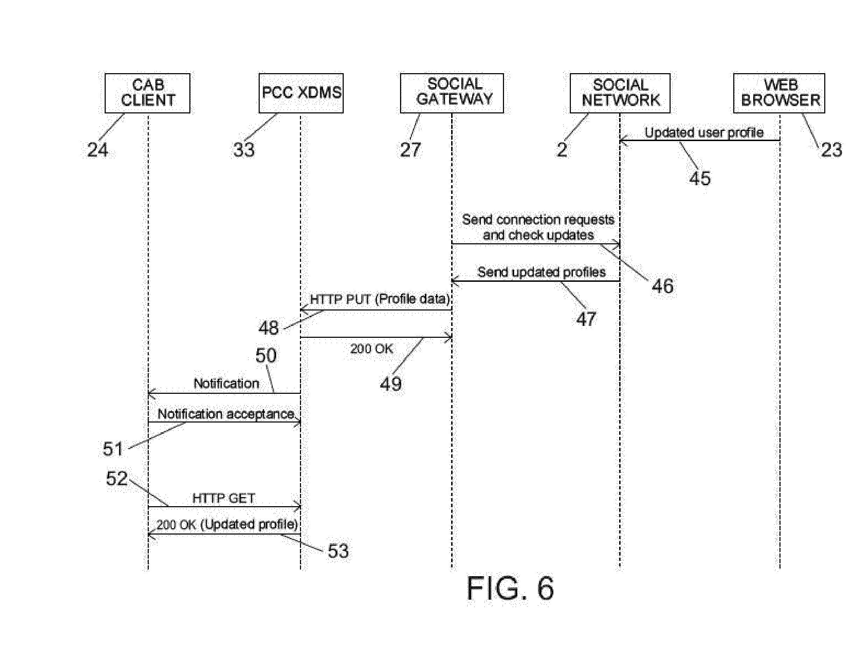

Figure 6 shows the method of the present invention for synchronization by polling by means of a sequence diagram. The social network (2) receives the updated user profile (45) from the web browser (23). The Social Gateway (27) periodically sends connection requests (46) to the social network (2) in search of the updated user profiles in the social network (2), which will return those user profiles that have been updated (47). The Social Gateway determines the communication protocol with the social network depending on the type of network the social network is. The Social Gateway then updates the Personal Contact Card (PCC) with the relevant contact information that has changed in the social network by means of the extended XDM-4i interface, by means of an HTTP PUT request (48). When the PCC XDMS (33) has stored the updated Personal Contact Card (PCC) information, it sends confirmation (49) of receipt to the Social Gateway (27), which can be a simple command, such as "200" for example. Furthermore, the PCC XDMS (33) can optionally send notification (50) to the CAB Client (24) of the changes in the Personal Contact Card (PCC) by means of including the data that has changed or by simply indicating the modified document from which the update information can be retrieved. The client responds to this with a notification acceptance (51). If the notification does not contain the changes, the CAB Client can send a request (HTTP GET) (52) to the PCC XDMS, which will return the updated profile (53). If the CAB Client supports the SIP protocol, this notification is based on the SIC-1 interface defined by OMA, and if it does not support SIP, notification is based on the XDM-non_SIP interface.

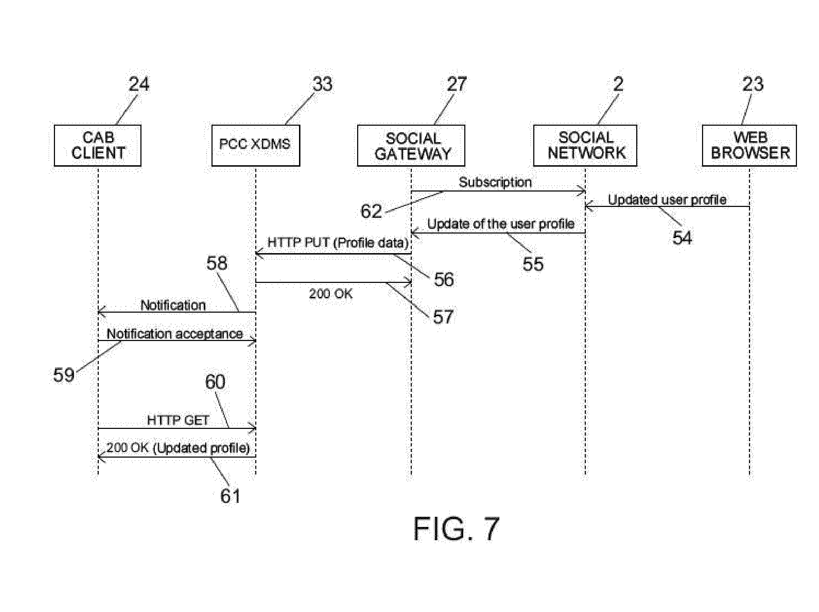

Figure 7 shows the method of the present invention for synchronization by subscription/notification by means of a sequence diagram. The social network (2) receives the updated user profile (54) from the web browser (23). The social network (2) then notifies the Social Gateway (27) of the update of the user profile (55). This is possible by means of the prior subscription (62) of the Social Gateway with the social network. Therefore, the social network keeps the Social Gateway (27) informed of potential changes in the information that are relevant for the user profiles. The Social Gateway (27) then updates (56) the PCC XDMS (33) with the updated Personal Contact Card (PCC), which comprises the notified change. When the PCC XDMS (33) has stored the updated Personal Contact Card (PCC) information, it sends confirmation (57) of receipt to the Social Gateway (27), which can be a simple command, such as "200" for example. Furthermore, the PCC XDMS (33) can optionally send notification (58) to the CAB Client (24) of the changes in the Personal Contact Card (PCC) by means of including the data that has changed or by simply indicating the modified document from which the update information can be retrieved. The client responds to this with a notification acceptance (59). If the notification does not contain the changes, the CAB Client can send a request (HTTP GET) (60) to the PCC XDMS, which will return the updated profile (61). If the CAB Client supports the SIP protocol, this notification is based on the SIC-1 interface defined by OMA, and if it does not support SIP, notification is based on the XDM-non_SIP interface.

## Claims

1. A method for synchronizing the profile of a user in social networks and the user's Personal Contact Card (PCC), where said user's user profile is published in an Open Mobile Alliance Converged Address Book (OMA CAB) system, and published in at least one social network, **characterized in that** the user profile comprised in the OMA CAB system is updated by means of a synchronization option selected from:
● synchronization by polling; and
● synchronization by subscription/notification;
where the user sends prior authorization to access the user profile published in the social network to a telecommunication services provider comprising the OMA CAB system.

2. The method for synchronizing the profile of a user in social networks and the user's Personal Contact Card (PCC) according to claim 1, **characterized in that** synchronization by polling comprises the following steps:
a) the user updating the user profile in the social network by means of a browser;
b) periodically connecting a Social Gateway with the social network in search of updated user profiles and retrieving updated data of said updated user profiles; and
c) updating the Personal Contact Card (PCC) with the updated data of the updated user profiles by means of an XDM-4i interface connecting the Social Gateway with the OMA CAB system.

3. The method for synchronizing the profile of a user in social networks and the user's Personal Contact Card (PCC) according to claim 2, **characterized in that** it further comprises sending a notification to the user about the update in the user's Personal Contact Card (PCC) including the updated data.

4. The method for synchronizing the profile of a user in social networks and the user's Personal Contact Card (PCC) according to claim 1, **characterized in that** the synchronization by subscription/notification comprises the following steps:
a) a Social Gateway subscribing to the social network;
b) the user updating the user profile in the social network by means of a browser;
c) the social network sending updated data of updated user profiles to the Residential Gateway; and,
d) updating the Personal Contact Card (PCC) with the updated data of the updated user profiles by means of an extended XDM-4i interface connecting the Social Gateway with the OMA CAB system.

5. The method for synchronizing the profile of a user in social networks and the user's Personal Contact Card (PCC) according to claim 4, **characterized in that** it further comprises sending notification to the user about the update in the user's PCC including the updated data.

6. A system for synchronizing the profile of a user in social networks and the user's Personal Contact Card (PCC) based on an OMA CAB enabler, **characterized in that** it comprises:
● a telecommunications provider side in turn comprising a network side and a user side; and,
● an internet side in turn comprising a user side and an internet side; where the internet side comprises at least one social network; and where the user side comprises a client communicating the client with a social network;
where the network side of the provider side further comprises a Social Gateway, an extended XDM-4i interface and an application interface.
